# EUROPEAN PATENT APPLICATION

(11) **EP 1 348 886 A1**
(43) Date of publication of application: **01.10.2003**
(21) Application number: 03006641.9
(22) Date of filing: 25.03.2003
(51) Int. Cl.: F16F 15/123

(54) **Torsional damper disk**

(30) Priority: 26.03.2002 JP 2002085951
(71) Applicant: Aisin Seiki Kabushiki Kaisha, Kariya-shi, Aichi-ken (JP)
(72) Inventor: Kamiya, Kouichi, Aichi-gun, Aichi-ken (JP); Takashi, Yukihisa, Chita-gun, Aichi-ken (JP); Fukaya, Nobuki, Anjo-shi, Aichi-ken (JP)
(74) Representative: Leson, Thomas Johannes Alois, Dipl.-Ing.

(57) **Abstract**

A torsional damper disk (10) includes a hub member (11) having a flange portion, a side plate (12) relatively rotatable with the hub member, a plurality of coil springs (13) for elastically connecting the hub member and the side plate in a circumferential direction, a pair of spring seats (14a,14b) provided at opposite ends of the coil spring, and a projecting portion (14c) formed at least at one spring seat of the pair of spring seats and projecting toward the other spring seat of the pair of spring seats. The projecting portion becomes in contact with the other spring seat of the pair of spring seats when a relative rotational angle between the hub member and the side plate reaches a predetermined angle whereby a relative rotation between the hub member (11) and the side plate (12) is permitted only within the predetermined angle and is prohibited when the relative rotational angle exceeds the predetermined angle.

## Description

### FIELD OF THE INVENTION

This invention generally relates to a torsional damper disk used for a clutch disk, a flywheel damper and the like. More particularly, the present invention pertains to a torsional damper disk which transmits power while cushioning the torsion by a coil spring.

### BACKGROUND OF THE INVENTION

Known torsional damper disk is disclosed in Japanese Patent Laid-Open Publication No. H08-42591. The disclosed torsional damper disk includes a hub member having a hub portion and a flange portion, and plates disposed on opposite sides of the hub member. The hub member and the plates are elastically connected to each other in a circumferential direction via coil springs. Since each coil spring is disposed in each notch formed at the flange portion of the hub member and opening radially outward, a weight of the hub member is decreased.

A size of the torsional damper disk is limited due to various restrictions such as a conformance to a vehicle. It has been known that when a total length of the coil springs disposed in the circumferential direction of the torsional damper disk with a limited size is longer in the circumferential direction, a design flexibility of torsion characteristics (i.e. relation between an input torque and a relative rotational angle of the disk) becomes larger, which is an advantage of the design. According to the disclosed disk mentioned above, each coil spring is disposed in each notch and thus can be provided in radially outward direction as far as possible. The total length of the coil springs in the circumferential direction can be set longer.

According to the disclosed disk, the coil springs are provided in radially outward direction by being disposed in the notches respectively. Then, a protrusion is formed at a portion of the plate facing to a space formed between an adjacent pair of the notches of the hub member. The protrusion of the plate is in contact with the flange portion of the hub member in the circumferential direction in order to restrict a relative rotation between the hub member and the plates. The maximum relative rotational angle between the hub member and the plates thus requires to be restricted within the space formed between the adjacent notches to each other in the circumferential direction. A length corresponding to the relative rotational angle is required in the circumferential direction at the space between the adjacent notches to each other. Therefore, the space between the adjacent notches cannot be reduced and the total length of the coil springs cannot be sufficiently set longer. As a result, the design of the torsion characteristics of the torsional damper disk is restricted.

### SUMMARY OF THE INVENTION

It is an object of the present invention to provide a torsional damper disk wherein a total length of coil springs in the circumferential direction is sufficiently long within a limited space of the torsional damper disk.

According to an aspect of the present invention, a torsional damper disk includes a hub member having a hub portion and a flange portion extending in a radially outward direction from the hub portion, a side plate coaxially provided and relatively rotatable with the hub member, a plurality of coil springs for elastically connecting the hub member and the side plate in a circumferential direction and disposed in receiving spaces formed at respective portions of the hub member and the side plate facing to each other. The torsional damper disk further includes a pair of spring seats provided at opposite ends of the coil spring and supporting the coil spring within at least one of the receiving spaces of the flange portion and the side plate, and a projecting portion formed at least at one spring seat of the pair of spring seats and projecting toward the other spring seat of the pair of spring seats. The projecting portion becomes in contact with the other spring seat of the pair of spring seats when a relative rotational angle between the hub member and the side plate reaches a predetermined angle whereby a relative rotation between the hub member and the side plate is permitted only within the predetermined angle and is prohibited when the relative rotational angle exceeds the predetermined angle.

### BRIEF DESCRIPTION OF THE DRAWING FIGURES

The foregoing and additional features and characteristics of the present invention will become more apparent from the following detailed description considered with reference to the accompanying drawing figures in which like reference numerals designate like elements and wherein:
Fig. 1 is a front view of a torsional damper disk when adopted to a clutch disk of a vehicle according to an embodiment of the present invention;
Fig. 2 is a cross sectional view taken along the line A-A of Fig. 1;
Fig. 3 is a view showing a state of a coil spring and a spring seat when a relative rotational angle between a hub member and side plates is 0;
Fig. 4 is a view showing a state of the coil spring and the spring seat when the relative rotational angle between the hub member and the side plates is a predetermined rotational angle;
Fig. 5 is a view showing a vicinity of a seat covering portion formed at the side plate;
Fig. 6 is a front view of the torsional damper disk according to a second embodiment of the present invention;
Fig. 7 is a front view of the torsional damper disk according to a third embodiment of the present invention.

### DETAILED DESCRIPTION OF THE INVENTION

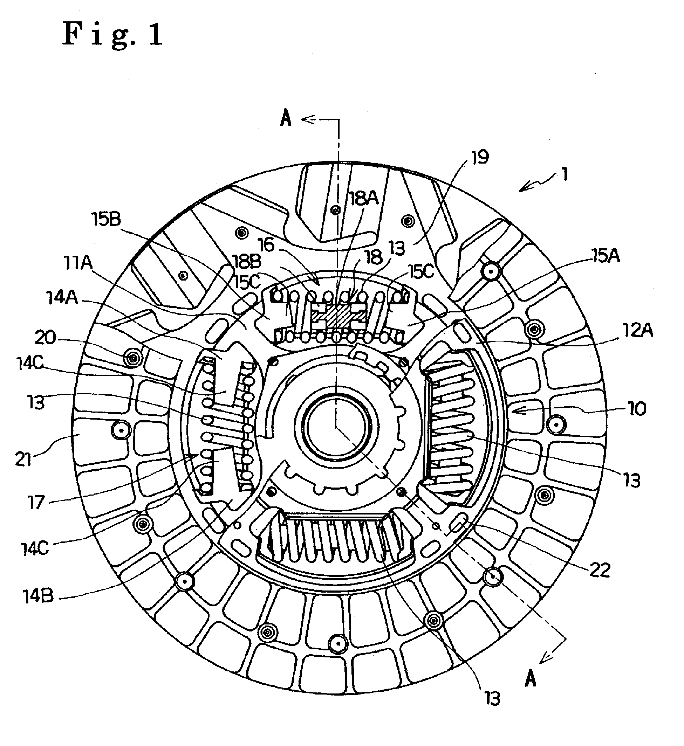

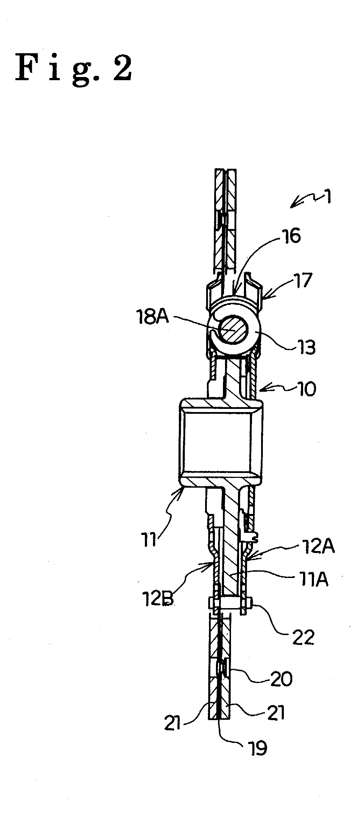

Embodiments of the present invention are explained referring to attached drawings. Fig. 1 is a front view of a torsional damper disk 10 when adopted to a clutch disk 1 for a vehicle according to a first embodiment of the present invention. Fig. 2 is a cross sectional view taken along the line A-A of Fig. 1.

The torsional damper disk 10 includes a hub member 11 having a hub portion and a flange portion 11A extending in a radially outward direction from the hub portion, a side plate 12 coaxially provided and relatively rotatable with the hub member 11, four coil springs 13 elastically connecting the hub member 11 and the side plate 12 in the circumferential direction, each pair of first spring seats 14A and 14B and the other each pair of second spring seats 15A and 15B for supporting each coil spring 13 within receiving spaces 16 and 17 formed at the flange portion 11A and the side plate 12 respectively. Four coil springs 13 are arranged in parallel with each other.

According to the present embodiment, the flange portion 11A of the hub member 11 is formed as a unit with the hub portion of the hub member 11. However, the flange portion 11A and the hub portion may be separately provided so that a small spring can be disposed therebetween. Then, a small torsional vibration may be absorbed between the flange portion 11A and the hub portion.

The side plate 12 includes a first side plate 12A and a second side plate 12B disposed on opposite sides of the hub member 11 in an axial direction. The first side plate 12A and the second side plate 12B are connected to each other at each outer circumferential portion thereof via rivets 22. Each coil spring 13 is disposed in the receiving spaces, i.e. notch 16 and window hole 17, facing to each other formed at the hub member 11 and the side plates 12A and 12B respectively. Four coil springs 13 have the same spring constant according to the present embodiment.

The notches 16 open in the radially outward direction of the flange portion 11A. Outer circumferential sides of the first spring seats 14A and 14B, and the second spring seats15A and15B are positioned radially outward relative to the outer circumferential side of the flange portion 11A. The window holes 17 formed at the side plates 12A and 12B each connects the outer circumferential side of the coil spring 13. The coil spring 13 is disposed in the notch 16 and the window holes17 while supported by the first spring seats 14A and 14B and the second spring seats 15A and 15B.

The first spring seats 14A and 14B are provided at opposite ends of the coil spring 13 within the notch 16 and the window holes 17. In addition, the second spring seats 15A and15B are provided at opposite ends of the coil spring 13 within the notch 16 and the window holes 17. The first spring seats 14A and 14B support two coil springs 13 facing to each other out of four coil springs and the second spring seats 15A and 15B support the other two coil springs 13 facing to each other. The first spring seats 14A and14B and the second spring seats 15A and15B have different structures.

The first spring seats 14A and14B are formed as a unit with projecting portions 14C respectively projecting to face to each other within the notch 16 and the window holes 17. The second spring seats 15A and15B are also formed as a unit with convex portions 15C respectively, which are shorter than the projecting portions 14C in the axial direction. The convex portions 15C restrain displacement of the coil springs in radially outward direction caused by the centrifugal force. In addition, a damper element 18 is provided between the convex portions 15C formed at the second spring seats 15A and15B respectively. The damper element 18 includes a rubber element 18A at a center portion thereof and contact members 18B provided at both end portions of the rubber element 18A in the axial direction.

A radially inward portion of a cushion spring 19 having an annular shape is connected to a radially outward portion of the second side plate 12B. The cushion spring 19 and the second side plate 12B are connected to each other via the rivets 22 which are also used to connect the first side plate 12A and the second side plate 12B. A pair of friction elements 21 each having an annular shape is fixed to opposite sides of the cushion spring 19 in the axial direction via rivets 20. The friction elements 21 can be retained between an engine flywheel and a pressure plate not shown. The hub member 11 is provided with a spline portion at an inner peripheral surface where an input shaft of a transmission having a spline portion not shown is engaged. The torsional damper disk 10 according to the present embodiment is adopted to the clutch disk in an aforementioned manner.

A structure of the first spring seats 14A and 14B are explained as follows. The projecting portions 14C formed at the first spring seats 14A and14B respectively are provided so that a relative rotation of the hub member 11 to the side plates 12A and 12B is prevented from further proceeding from a. point where edges of the projecting portions 14C contact to each other (i.e. relative rotational angle reaches a predetermined angle *θ*). That is, the projecting portions 14C become in contact with each other when the relative rotational angle of the hub member 11 to the side plates 12A and 12B reaches the predetermined angle θ whereby the relative rotation is only permitted within the predetermined angle θ and is prohibited when the relative rotational angle exceeds the predetermined angle θ.

Further, each projecting portion 14C has a plane edge. The projecting portion 14C becomes narrower in shape toward the plane edge thereof. When the relative rotational angle of the hub member 11 to the side plates 12A and 12B reaches the predetermined angle θ, the plane edges of the respective projecting portions 14C facing to each other become in parallel and in contact with each other. Axial centers of both projecting portions 14C are in alignment with each other. Thus structured projecting portions 14C facing to each other have the same shape. In addition, the first spring seats 14A and14B facing to each other also have the same shape.

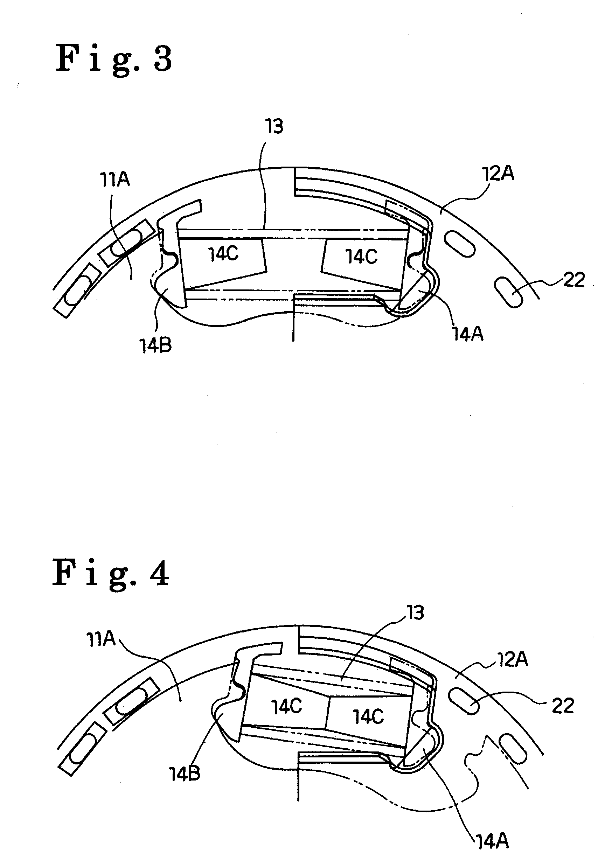

Fig. 3 shows a state in which the relative rotational angle between the hub member 11 and the side plates 12A and12B is 0 since not enough torsion torque to compress the coil springs 13 is applied to the clutch disk. Fig 4 shows a state in which the relative rotational angle between the hub member 11 and the side plates 12A and12B reaches the predetermined angle θ since the torsion torque to sufficiently compress the coil springs 13 is applied from the state of Fig. 3.

A torsional operation of the torsional damper disk 10 is explained as follows. A drive torque (torsion torque) of an engine (not shown) is first transmitted to the cushion spring 19 of the clutch disk via the friction elements 21 from the state of Fig. 3. The drive torque is then transmitted to the second side plate 12B connected to the cushion spring 19. The drive torque fluctuation applied to the clutch disk is transmitted to the hub member 11 while cushioned between the side plates 12A and 12B and the hub member 11 due to the compression of the coil springs 13. The drive torque is then transmitted to the input shaft of the transmission.

The aforementioned torsional operation is explained more in detail. Each coil spring 13 is compressed between the side plates 12A and12B and the hub member 11 via the first spring seats 14A and 14B and the second spring seats 15A and 15B by the torsion torque applied to the clutch disk. When the relative rotational angle reaches an angle θ 0 which is smaller than the predetermined angle θ, the respective convex portions 15C formed at the second spring seats 15A and 15B are in contact with the damper element 18. When the relative rotational angle is θ 0, the respective projecting portions 14C formed at the first spring seats 14A and 14B are not in contact with each other. When the torsion torque becomes further larger, the rubber element 18A of the damper element 18 is compressed in addition to the compression of the coil spring 13. When the relative rotational angle reaches the predetermined angle θ since the coil spring 13 and the rubber element 18A are further compressed, the projecting portions 14C formed at the first spring seats 14A and 14B respectively are in contact with each other and thus further relative rotation is restricted.

As mentioned above, a final stopper for the relative rotation between the hub member 11 and the side plates 12A and12B is constituted by means of the first spring seats 14A and 14B in contact with each other. Thus, a structure to restrict the relative rotation does not require to be provided at an outer circumferential side of the flange portion 11A. A length in the circumferential direction corresponding to the relative rotational angle does not require to be secured at the outer circumferential side of the flange portion 11A. That is, each space formed between the notches 16 adjacent to each other and the window holes 17 adjacent to each other accommodating each coil spring13 can be reduced.

Accordingly, each length of the coil spring 13 in the circumferential direction can be set longer and thus a total length of the four coil springs 13 can be set as long as possible. The design flexibility of the torsion characteristics of the torsional damper disk can be improved consequently.

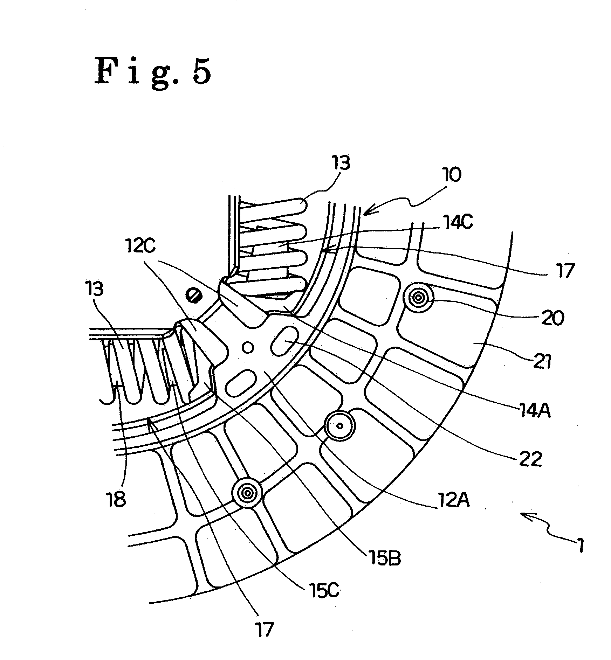

Fig. 5 is a front view showing a vicinity of the edge portion of the window holes 17 adjacent to each other formed at the first side plate 12A. Seat covering portions 12C are formed at the first side plate 12A by press working to cover a vicinity of contacting portions where the first side plate 12A is in contact with the first spring seats 14A and14B, and the second spring seats 15A and15B. Each seat covering portion 12C has an axial bent portion formed by the first side plate 12A being bent in the axial direction. Due to the seat covering portions 12C, a strength of the first side plate 12A can be assured against the torsion torque applied to portions formed between the window holes 17 adjacent to each other. The same seat covering portions as formed at the first side plate 12A are also formed at the second side plate 12B, which are not shown in Fig. 5, and support the first spring seats 14A and14B and the second spring seats 15A and15B.

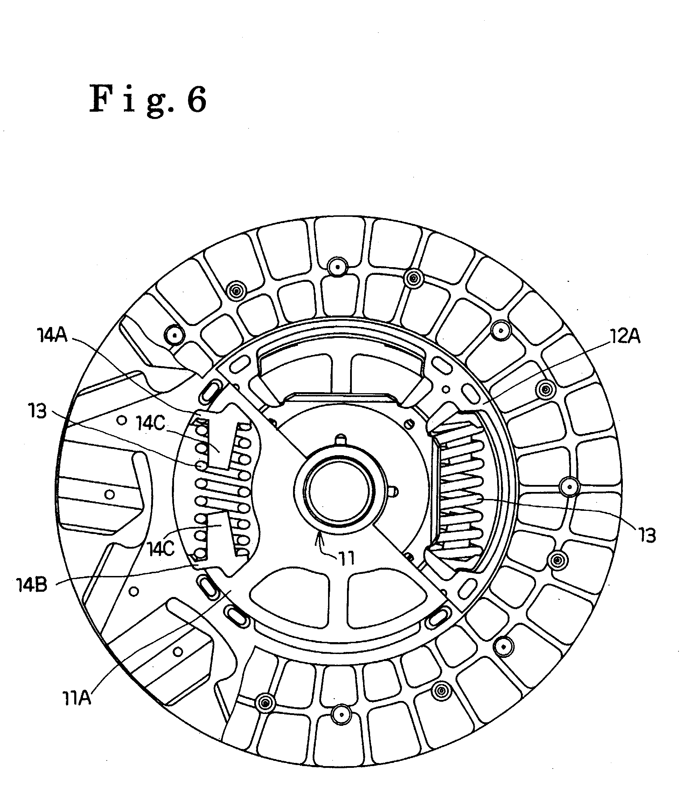

A second embodiment of the present invention is explained referring to Fig. 6. In Fig. 6, the two coil springs 13 each supported by the second spring seats 15A and 15B and the damper element 18, which are provided in the first embodiment, are eliminated so that the torsion torque is cushioned only by two coil springs 13 each supported by the first spring seats 14A and14B and the second spring seats 15A and 15B. The rest structure is substantially same as that of the aforementioned first embodiment and thus an explanation is not repeated here. According to the second embodiment, the coil springs 13 can be disposed in radially outward direction and thus the length of each coil spring 13 is set longer in the circumferential direction. A large torsional angle, a low rigidity and a high capacity are feasible and the torsion torque can be sufficiently cushioned only by two coil springs 13.

According to the second embodiment, a number of parts are decreased since less number of the coil springs 13 and the first spring seats 14A and14B are required.

In the aforementioned second embodiment, in order to restrict the relative rotational angle of the flanged hub 11 to the side plates 12A and 12B by means of the spring seats 14A and 14B, the first spring seats 14A and 14B require to be made of such a material that shapes of the first spring seats 14A and 14B cannot be deformed even when the maximum permissible torsion torque is applied thereto. According to the second embodiment, the first spring seats 14A and14B are made of nylon 66.

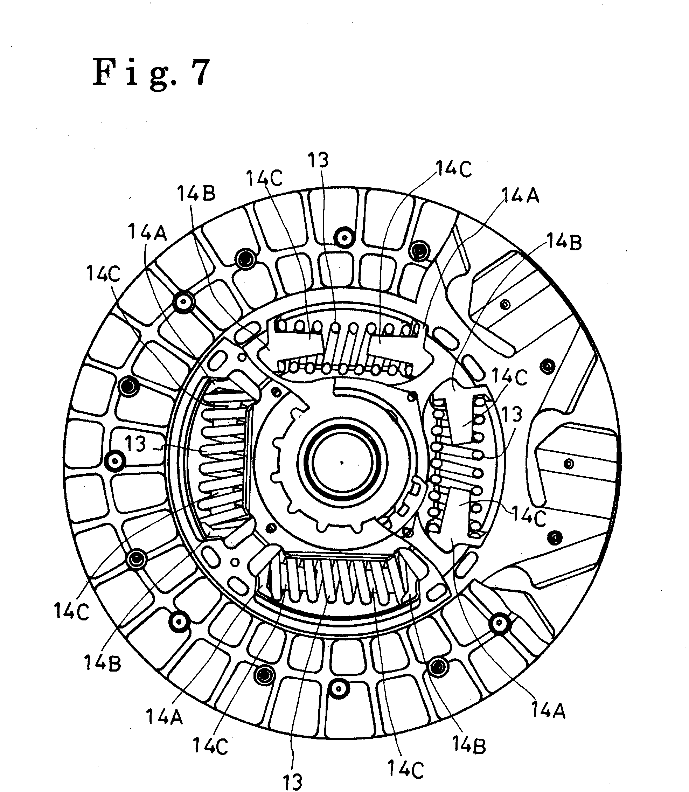

A third embodiment of the present invention is explained referring to Fig. 7. In Fig. 7, the damper element 18 is eliminated from the first embodiment and four coil springs 13 are supported between respective pairs of first spring seats 14A and 14B instead of the second spring seats 15A and15B. The projecting portions 14C formed at the first spring seats 14A and 14B function as a final stopper. The rest structure is same as that of the aforementioned embodiments and thus an explanation is not repeated here. According to the third embodiment, the coil springs 13 can be arranged in the radially outward direction and thus the length of each coil spring 13 is set longer in the circumferential direction. The large torsional angle, low rigidity and high capacity are feasible. Further, four pairs of the first spring seats 14A and 14B all function as the final stopper and thus a permissible torque by the stoppers can be set larger.

According to the aforementioned embodiments, the relative rotational angle between the hub member and the side plates is restricted by contacting the projecting portions with each other formed at the pair of the spring seats respectively. That is, the hub member and the side plates cannot relatively rotate to each other by exceeding the predetermined angle. Thus, the length in the circumferential direction corresponding to the relative rotational angle does not require to be secured at the outer circumferential side of the flange. Each space formed between the receiving spaces adjacent to each other accommodating each coil spring can be reduced. Within a limited space at the torsional damper disk, the length of each receiving space can be set longer in the circumferential direction and thus the total length of the coil springs can be set as long as possible in the circumferential direction.

As a result, the design flexibility of the torsional damper disk can be larger whereby a benefit for designing can be obtained.

According to the aforementioned embodiments, when the relative rotational angle reaches the predetermined angle, the torsion torque is applied to and received at the edges of the pair of projecting portions in contact with each other under a condition that the edges are in parallel with each other, so that an excessive pressure is not likely to be applied to the edges.

In addition, according to the aforementioned embodiments, the axial centers of the projecting portions are in alignment with each other when the spring seats receive a large torsion torque in the case of the relative rotational angle reaching the predetermined angle. Thus, the spring seats can efficiently receive the torsion torque when the relative rotational angle between the hub member and the side plates reaches the predetermined angle. Strength of the spring seats can be therefore assured.

Further, according to the aforementioned embodiments, the projecting portions have the same shape and thus the torsion torque applied to each projecting portion can be equalized. In addition, an assembly can be easier since two spring seats having the same shape can be disposed in each receiving space.

A torsional damper disk includes a hub member having a flange portion, a side plate relatively rotatable with the hub member, a plurality of coil springs for elastically connecting the hub member and the side plate in a circumferential direction, a pair of spring seats provided at opposite ends of the coil spring, and a projecting portion formed at least at one spring seat of the pair of spring seats and projecting toward the other spring seat of the pair of spring seats. The projecting portion becomes in contact with the other spring seat of the pair of spring seats when a relative rotational angle between the hub member and the side plate reaches a predetermined angle whereby a relative rotation between the hub member and the side plate is permitted only within the predetermined angle and is prohibited when the relative rotational angle exceeds the predetermined angle.

## Claims

1. A torsional damper disk (10) having a hub member (11) including a hub portion (11A) and a flange portion extending in a radially outward direction from the hub portion, a side plate (12) coaxially provided and relatively rotatable with the hub member, a plurality of coil springs (13) for elastically connecting the hub member and the side plate in a circumferential direction and disposed in receiving spaces (16,17) formed at respective portions of the hub member and the side plate facing to each other, and a pair of spring seats (14A, 14B) provided at opposite ends of the coil spring and supporting the coil spring within at least one of the receiving spaces of the flange portion and the side plate **characterized in that** the torsional damper disk further includes:
a projecting portion (14C) formed at least at one spring seat of the pair of spring seats and projecting toward the other spring seat of the pair of spring seats;
wherein the projecting portion becomes in contact with the other spring seat of the pair of spring seats when a relative rotational angle between the hub member and the side plate reaches a predetermined angle whereby a relative rotation between the hub member and the side plate is permitted only within the predetermined angle and is prohibited when the relative rotational angle exceeds the predetermined angle.

2. A torsional damper disk according to claim 1, wherein the projecting portion is formed at each spring seat of the pair of spring seats and edges of the respective projecting portions are in contact with each other when the relative rotational angle reaches the predetermined angle.

3. A torsional damper disk according to claim 2, wherein the edges of the projecting portions have plane shapes respectively and become in contact with each other under a condition that both edges are in parallel with each other when the relative rotational angle reaches the predetermined angle.

4. A torsional damper disk according to claim 3, wherein axial centers of the projecting portions are in alignment with each other when the relative rotational angle reaches the predetermined angle.

5. A torsional damper disk according to any one of claims 2,3 and 4, wherein the projecting portions have approximately the same shape.

6. A torsional damper disk according to any one of claims 1,2,3,4 and 5, wherein the receiving spaces formed at the hub member include notches (16) extending in a radially outward direction of the flange portion and an outer peripheral side of the pair of spring seats supporting the coil spring within the receiving space of the flange portion are positioned radially outward relative to an outer peripheral side of the flange portion.

7. A torsional damper disk according to claim 6, wherein the receiving spaces formed at the side plate are window holes (17) each connecting an outer peripheral side of each coil spring and the side plate includes seat covering portions (12C) integrally formed with the side plate, each seat covering portion having an axial bent portion for covering each contacting portion between the spring seat and the side plate.

8. A torsional damper disk according to claim 7, wherein the spring seat is made of a material not to be deformed when a maximum permissible torsion torque is applied to the torsional damper disk.

9. A torsional damper disk according to claim 1, wherein the side plate includes a first side plate (12A) and a second side plate (12B) disposed on opposite sides of the hub member in an axial direction and connected to each other at each outer circumferential portion thereof by riveting (22).

10. A torsional damper disk according to claim 2, wherein the pair of spring seats includes a pair of first spring seats (14A, 14B) and a pair of second spring seat (15A, 15B).
